# EUROPEAN PATENT APPLICATION

(11) **EP 2 290 501 A2**
(43) Date of publication of application: **02.03.2011**
(21) Application number: 10008938.2
(22) Date of filing: 27.08.2010
(51) Int. Cl.: G06F 3/02, B60K 37/06

(54) **Handheld controller device**

(30) Priority: 01.09.2009 US 238887 P
(71) Applicant: LECTRONIX, INC., Lansing, MI 48911 (US)
(72) Inventor: Dale, Allan, Haslett, Michigan 48840 (US); Sewell, Roger, Grand Ledge, Michigan 48837 (US)
(74) Representative: GPI & Associés

(57) **Abstract**

A handheld controller device (HCD) used to relay user inputs to a controller, such as but not limited to a HCD to relay user inputs to a vehicle system controller that controls one or more vehicle systems according to the user inputs. The HCD may be ergonomically shaped to match the human hand in a structurally supporting, and optionally, non-movable manner to allow a driver to provide user inputs without unduly sacrificing positional support, without having to change eye level, and/or without having to locate constantly moving buttons.

## Description

### CROSS-REFERENCE TO RELATED APPLICATIONS

This application claims the benefit of U.S. provisional application Serial No. 61/238,887 filed September 1, 2009, the disclosure of which is hereby incorporated in its entirety.

### TECHNICAL FIELD

The present invention relates to handheld controllers of the type used to electronically indicate user inputs to a control module for further processing, such as but not limited to controllers of the type used within vehicles to facilitate control of one or more vehicle subsystems.

### BACKGROUND ART

Many vehicles include a number of actuatable buttons within an instrumental panel to convey user intentions to control related vehicle subsystems. The buttons are typically placed below a static indicator of the related function such that the underlying function controlled by the button is fixed throughout all ranges of vehicle operation. Some multi-layer display have been used instead of theses types of static indicators so that other functional controls can be implemented with actuation of the same button. Instead of having a static image around a cluster of buttons on the instrument panel to exclusively designate climate control options, for example, the multi-layer displays can change the images to reflect entertainment or navigation control options. In the event the buttons are positioned around a display and/or if the display is a touch screen, the displayed options can be changed depending on user interaction.

While this approach supports the multi-layer display and control functionality contemplated by the present invention, it does not contemplate or suggest addressing the difficulties associated with the user reaching from a secure steering implement (e.g., steering, wheel, joystick, etc.) to actuate one of the buttons positioned farther forward on the instrument panel. This type of movement requires the user to shift their vision from a direction of travel to the instrument panel, to shift their balance from a normal seated position, and to disengage from support provided by the steering implement. This complex range of movements can be distracting and cumbersome, especially if the user is required to repeatedly reach away for the instrument panel to command one or more of the vehicle subsystems or if the user is operating the vehicle at a high rate of speed where support of both hands may be desirable.

Some vehicles have elected to mimic user operations of the instrument panel buttons with buttons included on the steering implement, which can be helpful in ameliorating the difficulties associated with reaching for the instrument panel buttons. The movement of the user actuated buttons on the steering implement can itself be problematic, however, since at least in the case of the steering wheel, the buttons are continuously orientated in different positional relations to the user. The buttons consequently change in positional relation to the user depending of the position of the steering implement, which can make it difficult for the user to easily identify the desired button and difficult for the user to actuate the desired button when the steering implement is in an awkward position.

### BRIEF DESCRIPTION OF THE DRAWINGS

The present invention is pointed out with particularity in the appended claims. However, other features of the present invention will become more apparent and the present invention will be best understood by referring to the following detailed description in conjunction with the accompany drawings in which:
FIGURE 1 illustrates a system for controller subsystems included within a vehicle according to one non-limiting aspect of the present invention; and
FIGURES 2-9 respectively illustrate perspective, top, bottom, left, right, rear, front, and assembly views of a hand-held control device (HCD) contemplated by one non-limiting aspect of the present invention.

### DETAILED DESCRIPTION

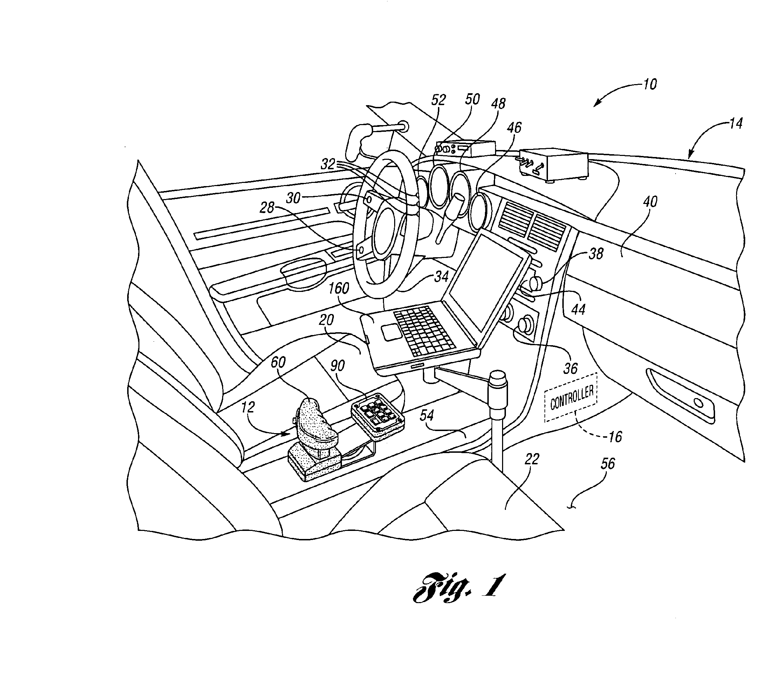

FIGURE 1 illustrates a system 10 operable for controlling vehicle subsystems according to one non-limiting aspect of the present invention. The system 10 may include a hand-held control device (HCD) 12 within a vehicle 14 to communicate user inputs to a vehicle system controller 16. The vehicle system controller 16 may process the user inputs to facilitate control of one or more vehicle subsystems. The system 10 is shown with respect to facilitating control of an automotive vehicle 14 shown with driver and passenger seats 20, 22 for exemplary purposes and without intending to limit the scope and contemplation of the present invention. The present invention fully contemplates its use and application in controlling any vehicle or non-vehicle system of the type that may rely on the HCD 12 contemplated by the present invention to facilitate related subsystem controls.

In addition to the HCD 12, a driver or front-seat passenger may manipulate one or more buttons 28, 30, 32 included on a steering wheel 34 and one or more buttons 36, 38 included on an instrument panel 40 to similarly communicate user inputs to the vehicle system controller 16. A display 44 and any number of gauges 46, 48, 50, 52 may be included within or proximate to the instrument panel 40 to facilitate communications with the vehicle occupants and to provide multi-layer control of the vehicle subsystems. Depending on the type of vehicle 14, any number of vehicle subsystems may be included and controlled according to user inputs. One non-limiting aspect of the present invention contemplates facilitating controls within a police cruiser. This may include controlling typical vehicle subsystems, such as but not limited to an entertainment system, navigation system, heating and cooling system, etc., as well as police specific subsystems, such as but not limited to lights/sirens, radar, camera, and wireless radio subsystems.

The HCD 12 may be positioned on a riser 54 included on a floor 56 of the vehicle 14 between the driver seat 20 and the passenger seat 22. The HCD 12 may be affixed to the riser 54 as a structurally stable and rigid device in that it can be used to provide constant and immovable support to the driver. In particular, the HCD 12 may include a hand grip 60 shaped to match and support the contours of a common human hand. The shaped and design of the hand grip 60 may be such that the driver can place their right hand on the HCD 12 to receive some structural support and positional security while steering with their left hand. This can be helpful in allowing the driver to actuate one more buttons included on the hand grip 60 without unduly interrupting the driver's ability to manage the vehicle 14, without taking the driver's line of sight from the road/windshield, and/or without requiring the driver to track positional changes of the buttons.

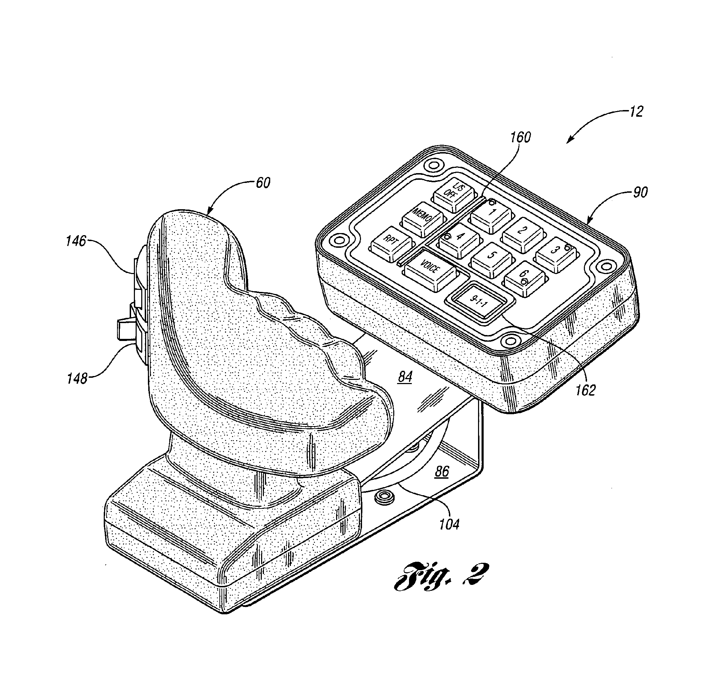

The hand grip 60 is shown to be ergonomically shaped to match contours of the average human hand (see Figures 2-9). The table shown below illustrates various dimensions for male and female hands according to percentiles. The hand breadth is measured as a width of the hand from one side to the other across the base of the fingers just above the palm. The hand length is a span of the hand from the longest finger (middle finger) to a bottom of the palm adjoining the forearm.

| | | Percentile | | | | |
|---|---|---|---|---|---|---|
| Sample | | 1^{st} | 5^{th} | 50^{th} | 95^{th} | 99^{th} |
| Male (cm) | Breadth | 8.1 | 8.4 | 9.0 | 9.8 | 10.0 |
| | Length | 17.3 | 17.9 | 19.3 | 21.1 | 21.9 |
| Female (cm) | Breadth | 7.1 | 7.3 | 7.9 | 8.6 | 8.9 |
| | Length | 15.9 | 16.5 | 18.0 | 19.7 | 20.5 |

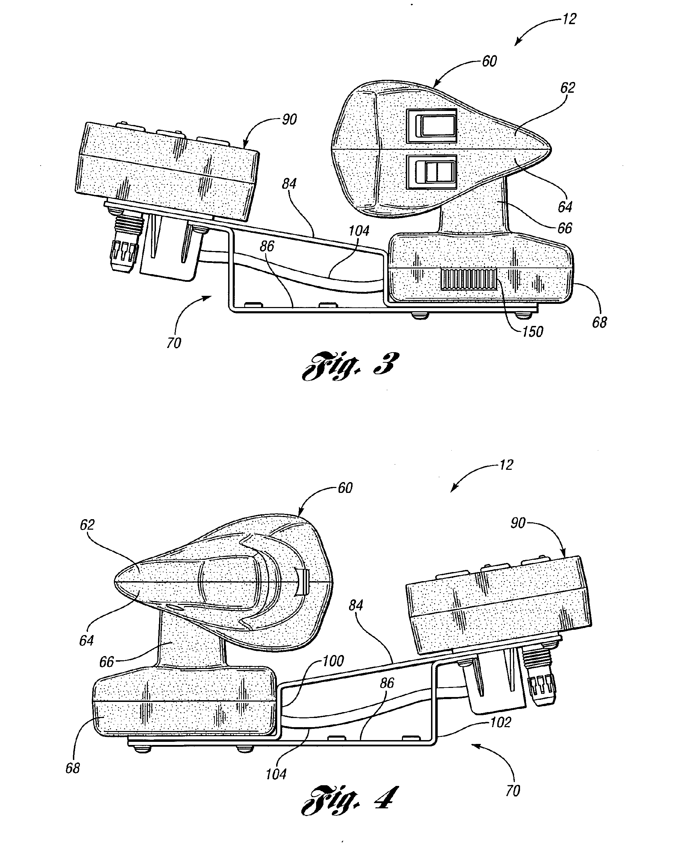

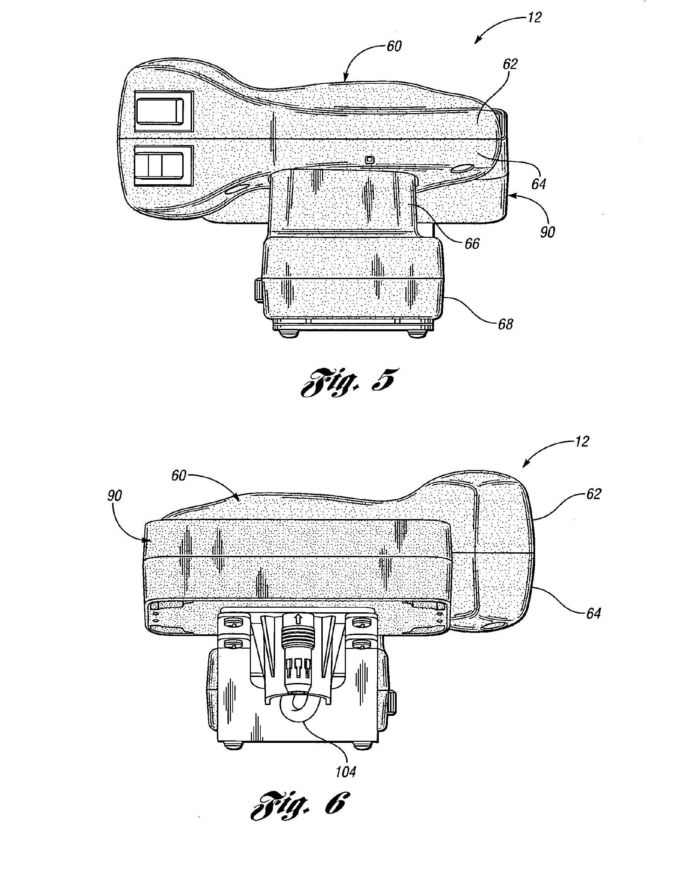

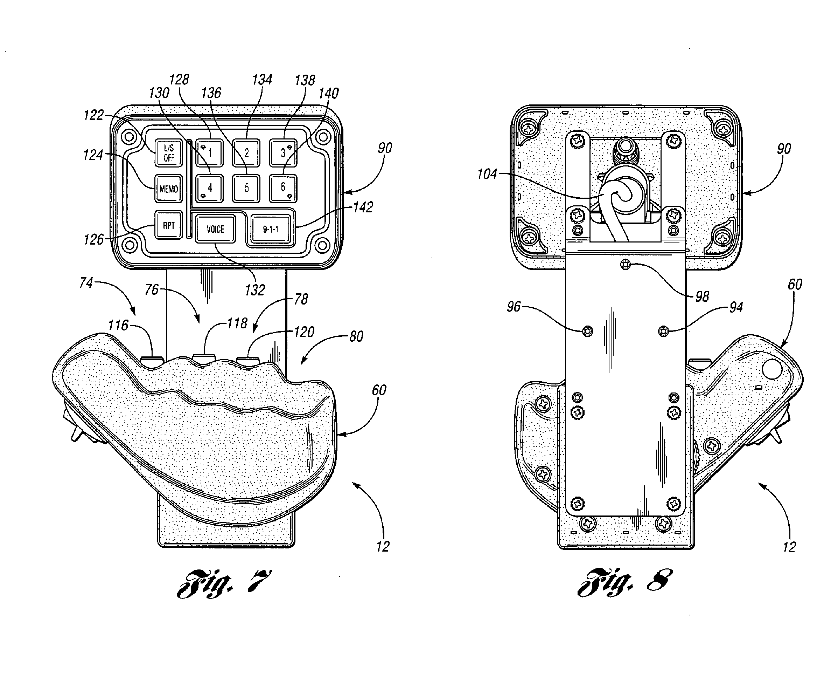

Part of the ergonomic shaping may include the illustrated contours, including those corresponding with a top half 62 of the hand grip 60 being generally sloped upwardly from rear to front relative to a bottom half 64 that is sloped downwardly from rear to front (see Figures 3-4). The sloped halves 62, 64 may define a left side surface that supports a thumb and towards which the top and bottom halves slope upwardly from a right side to a left side (see Figures 5-6). A column portion 66 of the bottom half 64 of the hand grip 60 may extend downwardly to a support section 68. The support section 68 may be affixed to a base structure 70, such as by welding or removable fastener. When viewed form the top side of Figure 7, the hand grip 60 may have a generally bean shape with depressions 74, 76, 78, 80 proximate a front surface to comfortably support an index finger, middle finger, ring finger, and little finger.

The base structure 70 of the hand grip 60 may include a top piece 84 and a bottom piece 86, which are shown in accordance with one non-limiting aspect of the present invention as stamped metal components. The use of stamped metal, as opposed to molded plastic, which itself may be used, may be advantageous in limiting assembly and design costs. A keypad 90 may be affixed to a forward end of the base structure 70 and at a distance from the hand grip 60 that allows the average human hand to rest their palm on the hand grip 60 and at the same time reach a forward most end of the keypad 90 without disengaging from a seated position on the hand grip 60. To facilitate the desired positional relation of the keypad 90 to the hand grip 60, and to accommodate the shape of each component, the top piece 84 of the base structure 70 may be sloped upwardly relative to a corresponding portion of the bottom piece 86. Each of the forward and rearward ends of the base structure 70 may be shaped as illustrated to facilitate maximizing the positional stability of the keypad 90 relative to the hand grip 60.

The bottom piece of the base structure 70 may include a plurality of apertures 94, 96, 98 to facilitate attachment to the vehicle 14, such as by screwing or welding. A number of removable fasteners (illustrated as screws) may also be used to facilitate attaching the two pieces 84, 86 of the base structure 70 together and to portions of the keypad 90 and hand grip 60. Offsets created by upward extending portions 100, 102 of each piece 84, 86 may be sufficient to permit a flexible cable 104 to run between the keypad 90 and hand grip 60 within a substantially protected covering. The cable 104 may include removable connectors 106, 108 configured to removable connect to printed circuit boards (PCBs) 110, 112 housed within each of the keypad 90 and hand grip 60. The cable 104 may be used to facilitate signal exchange between the two PCBs 110, 112. The ability of the PCBs 110, 112 to communicate with each other can be advantageous in facilitating communication of user inputs to the keypad 90 and hand grip 60.

Each of the keypad 90 and hand grip 60 may include a number of push buttons 116, 118, 120, 122, 124, 126, 128, 130, 132, 134, 136, 138, 140, 142, 144 (referred to as "push buttons") to facilitate receipt of the user inputs. The push buttons may be of the type that rely on a generally linear compression of the buttons in a direction parallel or along an axis defined by a centerline through each push button. In addition to the push buttons, the hand grip 60 is shown to include top and bottom toggle buttons 146, 148 and a wheel button 150. Where the push buttons return to an uncompressed, non-signal generating position when compression is removed, the toggle buttons 146, 148 and wheel button 150 remain in the current position until actuated to a new position. The toggle buttons 146, 148 may be moveable between first and second positions while the wheel button 150 is axially rotated between any number of positions, typically measured by a radial positioning measure.

User manipulation of the push buttons, toggle buttons 146, 148, and wheel button 150 may by communicated by the PCBs 110, 112 to the vehicle system controller 16. Optionally, the PCB 110 included in the hand grip 60 may be a passive PCB in that is simply relays button manipulation to the PCB 112 within the keypad 90 without any processing by a processor. A processor 152 on the keypad PCB 112 may then process the related impulses for transmission through a network interface and cable 154 connected to the vehicle system controller 16, allowing the system 10 to employ a minimum number of processors to exchange messages with the vehicle system controller 16. The processor 152 may format the user inputs into data messages prior to transmitting the corresponding information to the vehicle system controller 16. The data messages may be created according to any type of protocol and include any type of information, such as but not limited to an identification of the actuated button, a state of the button, and a time of actuation. This information may be used by the vehicle system controller 16 to coordinate related subsystem control.

The present invention fully contemplates the use of the hand grip and keypad buttons to facilitate any type of control, including multi-layer and variable display based controls where the subsystem controlled by the same button can at different times be used to instigate a different type of control depending on information shown within the display 44 or elsewhere within the instrument panel 40 at the time of manipulation. In some cases, user inputs to the HCD 12 may also be used to control remotely or wirelessly connected devices, such as but not limited to wireless devices like handheld radios, cellular phones, computers, etc. that may otherwise be in communication with the vehicle system controller 16. In this manner, the present invention is able to provide a structural secure, non-movable controller 12 to facilitate communication of user inputs to a vehicle system controller 16 that can be used to control virtually any system and facilitate the receipt of virtually any user input, especially when operated with information varying displays and other instrument panel features.

One non-limiting aspect of the present invention contemplates using the HCD 12 to facilitate user inputs within a police cruiser. Police cruisers may include a laptop computer 160 positioned forwardly of the HCD 12 that can be interfaced with the HCD 12 and controlled via inputs to the keypad 90 and hand grip 60. For example, a police office may input license plate numbers into the computer 160, or a computer located elsewhere in the vehicle 14, prior to instigating a traffic stops, such as to identify the individual and their police record. Shortly after inputting the license number, the officer may radio dispatch to notify the operator of any impending traffic stop and to active the lights and sirens to instruct the vehicle to move to the side of the road. These exchanges can be facilitated with the HCD 12 in that the HCD 12 can be used to input the license plate numbers, to radio dispatch, to active the lights and sirens, etc. While some of the related controls may be rely on the vehicle system controller 16 to change displays and other information in coordination with the user inputs to the HCD 12, the process can be advantageous in that the officer can complete all tasks that previously required greater movement between input devices without having to remove their hand from the HCD 12.

To facilitate some of the police cruiser operations contemplated by the present invention, the keypad is shown to include a L/S button 122, a memo button 124, a RPT button 126, a voice button 132, a number of numerical buttons for #1-#6 128, 130, 134, 136, 138, 140, and an emergency, 911 button 142. The L/S button 122 can be used to activate the lights and sirens. The voice button 132 can be used to radio dispatch or to conduct a mobile phone call through a vehicle speak and microphone arrangement. The number buttons 128, 130, 134, 136, 140 can be used to facilitate inputting numbers and selecting inputs from displayed information. The emergency, 911 button 142 can be used to generate an alert or other message to indicate an officer emergency.

The buttons 116, 118, 120 on the hand grip 60 may not necessarily be labeled like the buttons on the keypad, although they may be. The hand grip buttons, however, can operation in conjunction with the buttons on the keypad or as an alternative to the same, i.e., some operations may be instigated through keypad inputs as well as hand grip inputs. The table shown below illustrates a number of functions that may be instigated through hand grip 60.

| **OPERATIONAL MODE** | **I - RIGHT INDEX** | | **PUSH BUTTON FUNCTIONS II - RIGHT MIDDLE** | | **III - RIGHT RING** | |
|---|---|---|---|---|---|---|
| **Mode 1** | 1 | **Alert 1** | 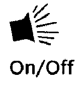 | Siren **Enable** | **AIR** | Air Horn |
| | *1^{st} Push:* Rear amber and blue lights *2^{nd} Push:* Adds red lights to rear *3^{rd} Push:* Removes amber lights *4^{th} Push:* OFF | | | | Sounds the air horn and is inactive while the siren is in use. | |
| **Mode 2** | 2 | **Alert** 2 | 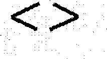 | Warning Lights | VOICE | Voice Command |
| | *1^{st} Push:* Two forward reds, all rear lights *2^{nd} Push:* Adds wig-wags, siren (when enabled) and oscillating center front red *3^{rd} Push:* OFF | | *1^{st} Push:* Turns the LEFT pointing warning light arrow on and off. *2^{nd} Push:* Turns the RIGHT pointing warning light arrow on and off. *3^{rd} Push:* Turns the CENTER OUT arrows on and off. *4^{th} Push:* OFF | | *1^{st} Push:* Allows voice commands to be accepted by the CPVE If prior to command activation - *2^{nd} Push:* Will cancel the command | |
| **Mode 3** | 3 | **Alert** 3 | 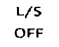 | L/S Lights/Siren OFF **OFF** | 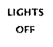 | Lights Out OFF |
| | *1^{st} Push:* All lights and siren (when enabled) *2^{nd} Push:* Removes wig-wags *3^{rd} Push:* Removes amber lights *4^{th} Push:* OFF | | *1^{st} Push:* Cancels all alert functions. *2^{nd} Push:* Cancels all lights and repeater (VRS). | | Turns off the siren, the emergency warning light system and the lights of the CPVE components in the front occupant compartment (including display, HCD, keyboard and HUD). *2-Second Hold:* Screen display shall be restored. Normal vehicle lights shall remain on. | |
| **Mode 4** | HOME | Radio **Channel** (Home) | **RPT** | **Repeater (VRS) Enable** | MEMO | Memo Recorder |
| | Returns the lowband radio (i.e., the primary CHP radio) to its default/home channel. | | On/Off | | *1^{st} Push:* Allows audio to be recorded by CPVE *2^{nd} Push:* Stops recording | |
| **Mode SO** | High-Speed Pursuit | | Routine Stop | | Other | |

Due to the ability of the present invention to provide single-handed control of any number of vehicle subsystems, it may be desirable to arrange and implement the corresponding controls in an intuitive and consistent manner so that the driver need not necessarily look at displays 44, gauges 46, 48, 50, 42 or other areas of the vehicle 14 when operating the HCD 12. Along those lines, the HCD buttons may be configured to provide tactile or audible feedback to the driver in order to let the driver know when an input has been received. Protuberances or other sensation inducing features may be included on the buttons or in proximity thereto, such as on the keypad 90 and hand grip 60, to indicate functions of the associated button and/or to simply identify its position relative to the other buttons.

As shown in Figure 2, portions 160, 162 of the top surface of the keypad 90 may be raised or lowered relative to the other portions in order to facilitate identification of one or more of the buttons. A vertical member 160 and a horizontal member 162 may rise above the top surface to a height slightly less than a height of the adjoining push buttons. The vertical raised member 160 may be positioned between a first and second column of the keypad push buttons and the horizontal raised member 162 being positioned between a second and third row of the keypad push buttons to provide a tactile differentiator between different portions of the keypad. A portion around the 911 button 142 may be sunken below most of the top surface of the keypad, optionally along with the 911 button 142, to prevent inadvertent actuation.

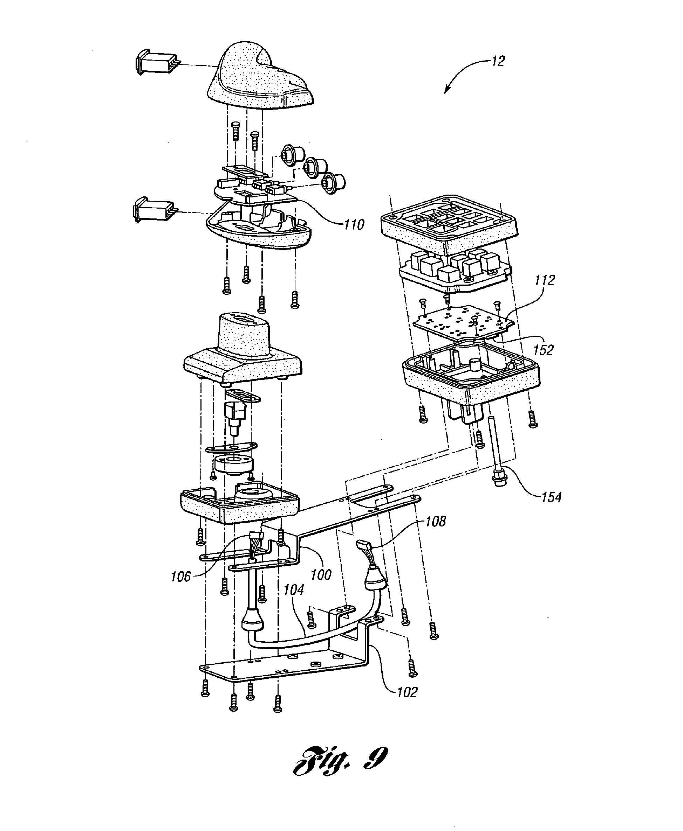

As shown in Figure 9, the 911 button 142 may be shorter than the rest of the keypad buttons. The keypad buttons are shown as hermetically sealed buttons covered by a rubber pad. The buttons attach to the PCB 112, and thereby, to the processor. The internal cavity or enclosure provided by the keypad may be defined by the connection of a top half to a bottom half. The hand grip may have a similar arrangement a first enclosure and second enclosure are defined by the connection of sections 62, 64 of the hand grip 60. The enclosures may be used to house the PCB 110 and hand grip buttons, which may also be hermetically sealed as illustrated.

As required, detailed embodiments of the present invention are disclosed herein; however, it is to be understood that the disclosed embodiments are merely exemplary of the invention that may be embodied in various and alternative forms. The figures are not necessarily to scale, some features may be exaggerated or minimized to show details of particular components. The figures are shown with respect to a driver being seated to the left of the hand controller, however, the present invention fully contemplates mirroring the hand controller for a driver seated to the right. Therefore, specific structural and functional details disclosed herein are not to be interpreted as limiting, but merely as a representative basis for the claims and/or as a representative basis for teaching one skilled in the art to variously employ the present invention. The features of various implementing embodiments may be combined to form further embodiments and combinations of the invention.

## Claims

1. A vehicle control system comprising:
a vehicle controller configured to control vehicle subsystems according to user inputs;
a steering implement configured to steer the vehicle;
a hand control device (HCD) affixed to a vehicle floor between front driver and passenger seats, the HCD being immovable to provide rigid structural support to a first hand of a driver while the driver manipulates the steering implement with a second hand, the HCD including a plurality of buttons on a hand grip and a keypad positioned forwardly of the hand grip, the plurality of buttons and the keypad being operable to relay user inputs to the vehicle controller, the hand grip being shaped to ergonomically and supportably match the first hand of the driver with each of the plurality of buttons being positioned on one or more sides of the hand grip below a top surface upon which a palm of the first hand rests to be supported while the driver steers the vehicle with the second hand, the keypad being positioned forwardly of the hand grip such that fingers on the first hand are able to reach forwardly to depress one or more of the plurality of buttons included on the keypad without completely disengaging the palm from the top surface.

2. The system of claim 1 wherein the hand grip is generally bean shaped with a forward end proximate a rearward end of the keypad having arcuately shaped depressions that gradually curve downwardly from a top surface to a bottom surface and inwardly from the forward end to comfortably support an index finger, middle finger, ring finger, and little finger.

3. The system of claim 2 wherein at least one of the hand grip buttons are included within each of at least three of the depressions.

4. The system of claim 1 wherein the hand grip is ergonomically shaped to match contours of a human hand and the keypad is generally rectangular.

5. The system of claim 1 further comprising:
a plurality of buttons included on an instrument panel, the buttons being actuatable to relay user inputs to the vehicle controller and positioned such that a driver must free at least one hand from the steering implement and lean forward from a seated position in order to actuate the instrument panel buttons; and
a plurality of buttons included an the steering implement, the steering implement buttons being actuatable to relay user inputs the vehicle controller and moving with movement of the steering implement.

6. A controller for use in electronically controlling vehicle subsystems comprising:
a hand grip ergonomically shaped to match contours of an average human hand, the shape **characterized** as including depressions on a front surface positioned below a top surface that support an index finger, middle finger, and ring finger, and a thumb support raised above the four depressions to support a thumb, the hand grip including first, second, and third push buttons respectively disposed within the depressions used to support the index finger, the middle finger, and the ring finger, and a top toggle button and a bottom toggle button on a lateral side of the thumb support, the hand grip push buttons configured to be actuated by a generally linear motion in a direction defined from the front surface to a rear surface of the hand grip and the top and bottom toggle buttons configured to be actuated by a generally linear motion in a direction defined from a left surface to a right surface of the hand grip;
a keypad having front, rear, left, right, top, and bottom surfaces, the keypad including an additional plurality of push buttons exposed on the top surface, the keypad push buttons configured to be actuated by a generally linear motion in a direction defined from the top surface to the bottom surface of the keypad;
a processor mounted on a printed circuit board (PCB) housed within the keypad, the processor in communication with each of the push buttons and toggle buttons, the processor transmitting messages over a vehicle network to indicate actuation of the push buttons and toggle buttons; and
a substantially inflexible base structure attached at a forward end to the keypad and at a rearward end to the hand grip, a distance from the forward end to the rearward end of the base structure determining a span between the keypad and hand grip, the span between the keypad and hand grip corresponding with a span of the average human hand such that the fingers of the average human hand can actuate each of the hand grip and keypad push buttons and the toggle buttons without disengaging from a seated position on a top surface of the hand grip.

7. The controller of claim 6 wherein a bottom portion of the hand grip below a top portion of the hand grip is affixed directly to the base structure, the top portion being defined as the portion of the hand grip having the push buttons and toggle buttons, the bottom portion including a wheel button, the wheel button configured to be actuated by a generally circulation motion in a clockwise and counter-clockwise direction defined about an axis perpendicular to an axis associated with the linear motion of the hand grip push buttons.

8. The controller of claim 7 further comprising a printed circuit board (PCB) within the hand grip, the PCB passively communicating electrical impulses representing actuation of one of the hand grip push and toggle buttons to the processor.

9. The controller of claim 8 wherein the passive communication of the electrical impulses from the PCB to the processor occurring without assistance from a second processor included on a PCB of the keypad.

10. The controller of claim 9 further comprising a flexible cable to carry the electrical impulses from the PCB to the processor.

11. The controller of claim 10 wherein the cable includes connectors at each end to removably connect the cable to each of the PCBs within the hand grip and the keypad.

12. The controller of claim 11 wherein the base structure includes a top piece and a bottom piece that are removably fastened together with a plurality of fasteners, wherein the top piece is fastened over at least a portion of the cable and the bottom piece is fastened below at least a portion of the cable.

13. The controller of claim 12 wherein the forward end of the base structure attached to the keypad is disposed above the rearward end of the base structure attached to the hand grip.

14. The controller of claim 13 wherein a portion of the top piece is angled upwardly in a direction toward the forward end and a corresponding portion of the bottom piece is flat in a direction covering the same distance.

15. The controller of claim 9 wherein the message transmitted from the second processor identifies the actuated button and a time of actuation and not an action to be taken in response thereto.

16. The controller of claim 6 wherein the left side of the hand grip corresponding with the thumb support has approximately twice the height of an opposed right side of the hand grip.

17. The controller of claim 6 wherein the hand grip is immovable and a distance between the push buttons on the hand grip and at least one of the push buttons on the keypad is approximately equal to a length of a 50^{th} percentile male.

18. The controller of claim 6 wherein the keypad includes 11 push buttons, arranged in at least three rows and at least three columns, and all but one of the keypad push buttons extends to a first height above the top surface of the keypad.

19. The controller of claim 18 wherein the keypad includes a vertical and a horizontal member raised above the top surface to a second height, the second height slightly less than the first height, the vertical raised member being positioned between a first and second column of the keypad push buttons and the horizontal raised member being positioned between a second and third row of the keypad push buttons, the raised members providing a tactile differentiator between different portions of the keypad.

20. A hand controller operable to communicate user inputs to a vehicle controller operable to control one or more vehicle subsystems, the hand controller comprising:
an immovable hand grip having a first plurality of buttons, the first plurality of buttons being positioned below a top surface used to support a user's palm;
a keypad positioned forwardly of the hand drip having a second plurality of buttons, the second plurality of buttons being arranged to be reached with the user's fingers while the user's palm rests on the top surface of the hand grip; and
a base structure connected at one point to the hand grip and at another point to the keypad, the base structure securing the hand controller to the vehicle and the keypad forwardly of the hand grip.
